(19) Europäisches Patentamt
European Patent Office
Office européen des brevets

(11) **EP 3 071 952 B1**

(12) **EUROPÄISCHE PATENTSCHRIFT**

(45) Veröffentlichungstag und Bekanntmachung des Hinweises auf die Patenterteilung:
**15.04.2020 Patentblatt 2020/16**

(21) Anmeldenummer: **14802013.4**

(22) Anmeldetag: **19.11.2014**

(51) Int Cl.:
*G01N 21/65* (2006.01)   *G02B 21/00* (2006.01)
*G02B 21/16* (2006.01)

(86) Internationale Anmeldenummer:
**PCT/EP2014/075055**

(87) Internationale Veröffentlichungsnummer:
**WO 2015/075089 (28.05.2015 Gazette 2015/21)**

(54) **EINRICHTUNG UND VERFAHREN ZUM BELEUCHTEN EINER PROBE**

DEVICE AND METHOD FOR ILLUMINATING A SAMPLE

INSTALLATION ET PROCÉDÉ POUR ÉCLAIRER UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2013 DE 102013112750**

(43) Veröffentlichungstag der Anmeldung:
**28.09.2016 Patentblatt 2016/39**

(73) Patentinhaber: **Leica Microsystems CMS GmbH 35578 Wetzlar (DE)**

(72) Erfinder:
- **KRISHNAMACHARI, Vishnu Vardhan 64625 Bensheim (DE)**
- **SEYFRIED, Volker 69226 Nußloch (DE)**
- **HAY, William C. 64646 Heppenheim (DE)**
- **KREMER, Manuel 69181 Leimen (DE)**

(74) Vertreter: **Bradl, Joachim Leica Microsystems GmbH Corporate Patents + Trademarks Department Ernst-Leitz-Strasse 17-37 35578 Wetzlar (DE)**

(56) Entgegenhaltungen:
**US-A1- 2006 192 969**

- **ROCHA-MENDOZA ISRAEL ET AL: "Coherent anti-Stokes Raman microspectroscopy using spectral focusing with glass dispersion", APPLIED PHYSICS LETTERS, AMERICAN INSTITUTE OF PHYSICS, US, Bd. 93, Nr. 20, 18. November 2008 (2008-11-18), Seiten 201103-201103, XP012112511, ISSN: 0003-6951, DOI: 10.1063/1.3028346 in der Anmeldung erwähnt**
- **ROCHA-MENDOZA I ET AL: "Differential coherent anti-Stokes Raman scattering microscopy with linearly chirped femtosecond laser pulses", OPTICS LETTERS, OPTICAL SOCIETY OF AMERICA, Bd. 34, Nr. 15, 1. August 2009 (2009-08-01), Seiten 2258-2260, XP001546408, ISSN: 0146-9592**

**Beschreibung**

Die Erfindung betrifft eine Einrichtung zum Beleuchten einer Probe, mit mindestens einer Pulslaserlichtquelle zum wiederholten Aussenden eines ersten Laserimpulses längs eines ersten Lichtwegs und eines zweiten Laserimpulses längs eines von dem ersten Lichtweg räumlich getrennten zweiten Lichtwegs, einem Überlagerungselement zur kollinearen Überlagerung der beiden Laserimpulse in einem gemeinsamen Lichtweg, einer in dem ersten oder in dem zweiten Lichtweg angeordneten Verzögerungsstufe zum Verzögern eines der beiden Laserimpulse relativ zu dem anderen Laserimpuls derart, dass die beiden längs des gemeinsamen Lichtwegs auf die Probe gesendeten Laserimpulse eine zeitliche Überlagerung aufweisen, einer in dem gemeinsamen Lichtweg angeordneten gemeinsamen Chirp-Einheit zur frequenzverändernden Beeinflussung sowohl des ersten Laserimpulses als auch des zweiten Laserimpulses, und mindestens einer in dem ersten Lichtweg angeordneten separaten Chirp-Einheit zur frequenzverändernden Beeinflussung allein des ersten Laserimpulses, wobei die gemeinsame Chirp-Einheit und die separate Chirp-Einheit zur Erzielung eines Sollzustands aufeinander abgestimmt sind, in dem eine instantane Frequenz des sowohl durch die separate Chirp-Einheit als auch durch die gemeinsame Chirp-Einheit beeinflussten ersten Laserimpulses und eine instantane Frequenz des allein durch die gemeinsame Chirp-Einheit beeinflussten zweiten Laserimpulses eine vorbestimmte Beziehung zueinander haben. Ferner betrifft die Erfindung ein entsprechendes Verfahren zum Beleuchten einer Probe.

Die kohärente Raman-Streumikroskopie, kurz CRSM, hat in jüngerer Vergangenheit eine erhebliche Bedeutung in der bildgebenden chemischen Probenanalyse etwa in der Biologie, der Pharmazie oder in der Ernährungswissenschaft erlangt. Dabei kommen verschiedenartige CRSM-Verfahren zur Anwendung, beispielsweise die kohärente Anti-Stokes-Raman-Streuung (CARS), die kohärente Stokes-Raman-Streuung (CSRS), die Raman-induzierte Kerr-Effekt-Streuung (RIKES) und die stimulierte Raman-Streuung (SRS). Zum Stand der Technik wird im Folgenden auf die nachstehende Dokumentenliste Bezug genommen:

[1] Nandakumar, P.; Kovalev, A. & Volkmer, A., "Vibrational imaging based on stimulated Raman scattering microscopy", New Journal of Physics, 2009, 11, 033026

[2] Freudiger, C. W.; Roeffaers, M. B. J.; Zhang, X.; Saar, B. G.; Min, W. & Xie, X. S., "Optical heterodyne-detected Raman-induced Kerr effect (OHD-RIKE) microscopy", Journal of Physical Chemistry B, 2011, 115, 5574-5581

[3] Saar, B. G.; Freudiger, C. W.; Reichman, J.; Stanley, C. M.; Holtom, G. R. & Vie, X. S., "Videorate molecular imaging in vivo with stimulated Raman scattering", Science, 2010, 330, 1368-1370

[4] Mikhail N. Slipchenko, Robert A. Oglesbee, Delong Zhang, WeiWu, and Ji-Xin Cheng, "Heterodyne detected nonlinear optical imaging in a lock-in free manner," J. Biophotonics, 2012,5,1-7

[5] A. Zumbusch, G. R. Holtom, and X. S. Xie, "Three-dimensional vibrational imaging by coherent anti-Stokes Raman scattering", Phys. Rev. Lett., 1999, 82, 4142-4145

[6] J. X. Cheng and X. S. Xie, "Coherent anti-Stokes Raman scattering microscopy: Instrumentation, theory, and applications", J. Phys. Chem. B, 2004, 108, 827-840

[7] C. L. Evans and X. S. Xie, "Coherent anti-stokes Raman scattering microscopy: chemical imaging for biology and medicine", Annu. Rev. Anal. Chem, 2008, 1, 883-909

[8] N. Dudovich, D. Oron, and Y. Silberberg, "Single-pulse coherently controlled nonlinear Raman spectroscopy and microscopy", Nature, 2002, 418, 512-514

[9] Hellerer, T.; Enejder, A. M. K.; Zumbusch, A, "Spectral focusing: High spectral resolution spectroscopy with broad-bandwith laser pulses", Applied Physics Letters, 2004, 85, 25-27

[10] Israel Rocha-Mendoza, Wolfgang Langbein, and Paola Borri, "Coherent anti-Stokes Raman microspectroscopy using spectral focusing with glass dispersion", Applied Physics Letters, 2008, 93, 201103:1-201103:3

[11] Adrian F. Pegoraro, Andrew Ridsdale, Douglas J. Moffatt, Yiwei Jia, John Paul Pezacki, and Albert Stolow, "Optimally chirped multimodal CARS microscopy based on a single Ti:sapphire oscillator", Optics Express, 2009, 17, 2984-2996

[12] Daniel L. Marks, Stephen A. Boppart: "Distinguishing non-resonant four-wave-mixing noise in coherent stokes and anti-stokes Raman scattering", US 2006/0192969 A1

Bei der CRSM-Technik werden zwei gepulste Lichtfelder mit Impulsbreiten in einem Bereich von 100 fs bis 20 ps unterschiedlicher Wellenlänge durch eine konfokale Mikroskopoptik geleitet und auf die Probe fokussiert. Dabei werden die gepulsten Lichtfelder mit Frequenzen, die typischerweise in einem Bereich von 1 bis 100 MHz liegen, von einer Kurzpulslaserlichtquelle ausgesendet. Über eine entsprechende Strahlführung und geeignete Fokussieroptiken werden die Lichtfelder auf der Probe einander räumlich und zeitlich überlagert. Unter der zeitlichen Überlagerung ist dabei das paarweise Zusammenfallen der die gepulsten Lichtfelder bildenden Laserimpulse zu verstehen. Beispielsweise wird bei dem SRS-Verfahren oder dem bildgebenden Überlagerungs-RIKES-Verfahren eines der beiden Lichtfelder im Hinblick auf Intensität, Frequenz oder Polarisation mit einer bestimmten Frequenz, die typischerweise im kHz- bis MHz-Bereich liegt, moduliert, bevor es in der Probe mit dem anderen Lichtfeld wechselwirkt. Für die SRS- und RIKES-Bildgebung wird dann das zu Beginn unmodulierte Lichtfeld erfasst und unter Anwendung einer Lock-in- oder Hüllkurven-Demodulations-Technik die Intensitätsmodulation extrahiert und in Form eines Bildes dargestellt. Zur Realisierung der Lock-in-Technik wird auf die Dokumente [1], [2] und [3] verwiesen. Die Hüllkurven-Demodulations-Technik ist in Dokument [4] beschrieben. Infolge der Wechselwirkung mit der Probe wird im Falle von CARS und CSRS ein drittes Lichtfeld erfasst und als Bild angezeigt. Dies ist in den Dokumenten [5], [6] und [7] beschrieben.

In allen vorstehend genannten CRSM-Techniken ist das Messsignal nur dann stark, wenn die Differenz zwischen den Frequenzen der einfallenden Lichtfelder mit einer Schwingungsresonanzfrequenz in der Probe übereinstimmt. Derzeit werden die im Hinblick auf spektrale Selektivität, Signalintensität und Signal-Rausch-Verhältnis besten Bilder unter Verwendung von Pikosekunden-Laserlichtquellen und optisch parametrischen Oszillatoren, kurz OPOs, mit Impulsbreiten von 5 bis 7 ps erzielt.

Demgegenüber finden heutzutage auch Femtosekundenlaser weitläufig Anwendung, z.B. in der Multiphotonen-Fluoreszenzmikroskopie und in Mikroskopietechniken, die auf dem Prinzip der Frequenzverdopplung (SHG) oder Frequenzverdreifachung (THG) basieren. Es wird deshalb erheblicher Aufwand betrieben, Femtosekundenlaser auch in der CRSM-Bildgebung einzusetzen. Beispielhaft wird hierzu verwiesen auf die Dokumente [8], [9], [10] und [11] verwiesen.

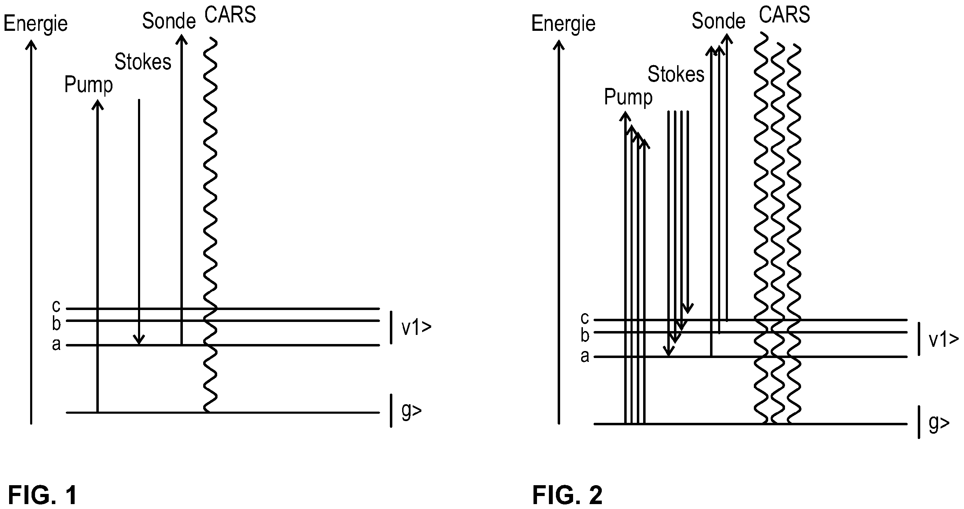

Die Verwendung eines Femtosekundenlasers oder eines optisch parametrischen Oszillators für CRSM hat jedoch den erheblichen Nachteil einer schlechten spektralen Selektivität. Dies soll im Folgenden anhand der Figuren 1 und 2 erläutert werden, in denen beispielhaft die CARS-Emission, die durch eine Anregung mit einem Pikosekundenlaser erzielt wird (Figur 1), der CARS-Emission, die durch die Anregung mit einem Femtosekundenlaser erzielt wird, gegenübergestellt ist.

Figur 1 zeigt rein schematisch ein Termschema einer Probe, das einen Schwingungsgrundzustand |g> und Zustandssystem |v1> mit einem Satz aus ersten angeregten Schwingungszuständen a, b, c aufweist. Diese ersten angeregten Schwingungszustände a, b, c weisen Energieniveaus auf, die auf drei verschiedene molekulare Bindungen, z.B. N-H, O-H und C-H, zurückzuführen sind. Bei dem CARS-Verfahren werden nun zwei Laserstrahlen, von denen einer als Pump-Strahl und der andere als Stokes-Strahl bezeichnet wird, auf die Probe gesendet. Die Energiedifferenz dieser Strahlen stimmt mit der Energie eines der Schwingungszustände überein. Ferner kommt ein Sondenstrahl zur Anwendung, der die Schwingungskohärenz sondiert.

In dem in Figur 1 gezeigten Fall, in dem die CARS-Emission mit einem Pikosekundenlaser angeregt wird, sind der Pump-Strahl und der Stokes-Strahl spektral vergleichsweise schmalbandig. Dies liegt an dem aus der Fourier-Analyse bekannten Umstand, dass mit zunehmender zeitlicher Ausdehnung eines Laserimpulses die spektrale Verteilung der in dem Laserimpuls enthaltenen Frequenzen schmäler wird. Dementsprechend ist es unter Verwendung des Pikosekundenlasers möglich, die Schwingungszustände a, b, c selektiv anzuregen.

Figur 2 veranschaulicht demgegenüber die entsprechenden Verhältnisse bei Verwendung eines Femtosekundenlasers anstelle des Pikosekundenlasers. Da die zeitlichen Impulsbreiten des Pump-Strahls und des Stokes-Strahls in diesem Fall kleiner sind, nehmen die spektralen Breiten der Laserimpulse entsprechend zu. Demzufolge ist es nicht mehr möglich, die einzelnen Schwingungszustände a, b, c selektiv anzuregen. Die spektrale Selektivität ist somit durch die spektral breitbandige Anregung des Femtosekundenlasers beeinträchtigt.

Zur Lösung dieses Problems wurden verschiedene Verfahren vorgeschlagen, die in der Literatur unter dem Schlagwort "spektrale Fokussierung" bekannt sind. Hierzu wird auf Dokument [10] verwiesen. Dort werden zwei Glasblöcke vorbestimmter Länge verwendet, von denen einer in dem Lichtweg des Stokes-Strahls angeordnet ist, während sich der andere in einem gemeinsamen Lichtweg befindet, in dem der Stokes-Strahl und der Pump-Strahl zusammengeführt sind. Jeder dieser beiden Glasblöcke bewirkt infolge der Dispersion eine spektrale Verbreiterung des durch ihn tretenden Laserimpulses. Die Glasblöcke bilden somit sogenannte Chirp-Einheiten. Unter dem Begriff "Chirp" ist dabei die frequenzverändernde Beeinflussung des Laserlichtes zu verstehen, die beispielsweise eine zeitliche Streckung des jeweiligen Laserimpulses, aber auch eine zeitliche Komprimierung des Laserimpulses bewirken kann.

In der aus Dokument [10] bekannten Anordnung sind die Dispersionswirkungen der beiden Glasblöcke in Abhängigkeit der Wellenlängen des Pump-Strahls und des Stokes-Strahls so gewählt, dass die zugehörigen, auf der Probe einander überlagerten Laserimpulse zur Erzielung der gewünschten spektralen Fokussierung in der gewünschten Weise zeitlich und spektral aufeinander abgestimmt sind. Hierzu müssen die als Chirp-Einheiten verwendeten Glasblöcke exakt auf die Wellenlängen des Pump- und des Stokes-Strahls ausgelegt sein. Sollen andere Wellenlängen zur Anwendung kommen, so müssen die Glasblöcke durch entsprechend modifizierte Einheiten ersetzt werden. Dies ist kostspielig und für den Anwender mit einem erheblichen Aufwand verbunden.

Der Erfindung liegt die Aufgabe zugrunde, eine Einrichtung und ein Verfahren zum Beleuchten einer Probe anzugeben, die eine flexibel handhabbare und anwendungsfreundliche Beleuchtung der Probe ermöglichen.

Die Erfindung löst diese Aufgabe durch die Gegenstände der unabhängigen Ansprüche. Vorteilhafte Weiterbildungen der Erfindung sind in den abhängigen Ansprüchen angegeben.

Die Erfindung sieht zunächst eine Einstellbarkeit zumindest der Wellenlänge des längs des ersten Lichtwegs ausgesendeten ersten Lichtimpulses in einem vorbestimmten Wellenlängenbereich vor. Um die gewünschte spektrale Fokussierung unabhängig von der gerade eingestellten Wellenlänge zu ermöglichen, ist darüber hinaus die in dem ersten Lichtweg auf den ersten Lichtimpuls einwirkende separate Chirp-Einheit als eine in Abhängigkeit der gerade eingestellten Wellenlänge ansteuerbare Einheit ausgeführt. Dementsprechend ist eine mit der separaten Chirp-Einheit gekoppelte Steuerung vorgesehen, welche die Chirp-Einheit mit einem von der Wellenlänge des ersten Laserimpulses abhängigen Steuerparameter ansteuert, um einen gewünschten Sollzustand, insbesondere die spektrale Fokussierung einzustellen. Damit lässt sich die erfindungsgemäße Beleuchtungseinrichtung flexibel in einem weiten Wellenlängenbereich einsetzen, ohne eine Modifizierung oder einen Austausch der zur Erzielung der spektralen Fokussierung bestimmten Chirp-Einheiten vornehmen zu müssen. Dies erleichtert die Handhabung der Einrichtung erheblich.

Die Erfindung ist insbesondere auf die Verwendung eines Femtosekundenlasers als Pulslaserlichtquelle ausgelegt, hierauf jedoch nicht beschränkt. So ist es ebenso denkbar, etwa einen Pikosekundenlaser als Pulslaserlichtquelle zu verwenden.

In dem Sollzustand ist die Differenz zwischen der instantanen Frequenz des sowohl durch die separate Chirp-Einheit als auch durch die gemeinsame Chirp-Einheit beeinflussten ersten Laserimpulses und der instantanen Frequenz des allein durch die gemeinsame Chirp-Einheit beeinflussten zweiten Laserimpulses während der zeitlichen Überlagerung der beiden Laserimpulse konstant. Indem die separate Chirp-Einheit so angesteuert wird, dass die zeitliche Konstanz der vorstehend genannten Differenz der instantanen Frequenzen der beiden Laserimpulse an der Probe gegeben ist, wird gewährleistet, dass beispielsweise in einer CRSM-Anwendung in der Zeit, in der die beiden Laserimpulse einander zeitlich überlagert sind, ein- und dieselbe Frequenzdifferenz eingestellt und damit die erfindungsgemäße Einrichtung spektral fokussiert bleibt. Außerdem ist es möglich, allein durch Verzögern eines der beiden Laserimpulse relativ zu dem anderen Laserimpuls die Differenz zwischen den instantanen Frequenzen der beiden Laserimpulse an der Probe variabel einzustellen, beispielsweise um in einem CRSM-Verfahren selektiv verschiedene Schwingungszustände anzuregen.

Die gemeinsame Chirp-Einheit dehnt beispielsweise den ersten Laserimpuls und den zweiten Laserimpuls, die sich längs des zweiten Lichtwegs ausbreiten. Hierzu wirkt die gemeinsame Chirp-Einheit auf die beiden Laserimpulse in der Weise ein, dass Laserimpulskomponenten kleinerer Wellenlänge gegenüber Laserlichtkomponenten größerer Wellenlänge verzögert werden. Diese Art der frequenzverändernden Beeinflussung wird auch als positiver Chirp bezeichnet. Ein negativer Chirp liegt dagegen vor, wenn die Laserimpulskomponenten größerer Wellenlänge gegenüber den Laserimpulskomponenten geringerer Wellenlänge verzögert werden.

Wird beispielsweise die Erfindung auf ein CRSM-Verfahren angewandt und dabei mit einem Pump-Strahl variabler Wellenlänge sowie einem Stokes-Strahl fester Wellenlänge gearbeitet, wobei diese feste Wellenlänge größer als die variable Wellenlänge des Pump-Strahls ist, so kann die auf den Pump-Strahl einwirkende separate Chirp-Einheit so angesteuert werden, dass sie den Pump-Strahl mit einem negativen Chirp beaufschlagt, um die Differenz der instantanen Frequenzen der beiden Laserimpulsen an der Probe konstant zu halten.

Die gemeinsame Chirp-Einheit, die sowohl auf den ersten als auch auf den zweiten Laserimpuls einwirkt, ist beispielsweise als Glasblock ausgebildet. Demgegenüber ist die erfindungsgemäß ansteuerbare, separate Chirp-Einheit beispielsweise aus optischen Elementen, z.B. Spiegeln und/oder Gittern gebildet, die sich in Abhängigkeit des wellenlängenabhängigen Steuerparameters gegeneinander bewegen lassen, um die gewünschte frequenzverändernde Beeinflussung des ersten Laserimpulses zu erzielen.

Die sowohl auf den ersten als auch auf den zweiten Laserimpuls einwirkende gemeinsame Chirp-Einheit kann auch aus einem optischen Modulator oder einem optischen Filter gebildet sein, der ohnehin in der erfindungsgemäßen Einrichtung etwa zur Intensitätsmodulation oder zur Wellenlängenfilterung benötigt wird, sofern der durch dieses Element bewirkte Chirp groß genug ist, um auf ein zusätzliches (gemeinsames) Chirp-Element verzichten zu können.

Es ist ferner möglich, eine zusätzliche separate Chirp-Einheit, die zur frequenzverändernden Beeinflussung allein des zweiten Laserimpulses im zweiten Lichtweg angeordnet ist, vorzusehen. In diesem Fall werden sowohl die erste als auch die zweite separate Chirp-Einheit in der erfindungsgemäßen Weise angesteuert, um in dem gesamten Wellenlängenbereich, innerhalb dessen die Wellenlänge eines oder beider Lichtimpulse variiert wird, die selektive Fokussierung der beiden Lichtimpulse an der Probe zu gewährleisten.

In einer bevorzugten Ausführungsform ist die mindestens eine ansteuerbare Chirp-Einheit in der Pulslaserlichtquelle enthalten. Diese Ausführungsform macht sich zunutze, dass herkömmliche Pulslaserlichtquellen häufig über eine sogenannte Prechirp-Einheit verfügen, die erfindungsgemäß nun dazu genutzt wird, die spektrale Fokussierung über den gesamten Wellenlängenbereich, innerhalb dessen die Wellenlänge eines oder beider Laserimpulse variiert wird, sicherzustellen. Damit sieht die Erfindung vor, eine solche in die Pulslaserlichtquelle eingebaute Prechirp-Einheit in einer Weise anzusteuern, die von der herkömmlichen Ansteuerung deutlich abweicht. So werden Prechirp-Einheiten im Stand der Technik in der Regel so eingestellt, dass die Impulsdauer der von der Kurzpulslaserlichtquelle ausgesendeten Lichtimpulse an der Probe möglichst klein ist. In Abkehr dieser herkömmlichen Ansteuerung zielt dagegen die erfindungsgemäße Ansteuerung der in die Kurzpulslaserlichtquelle integrierten Prechirp-Einheit auf die spektrale Fokussierung ab, die nicht notwendigerweise mit möglichst kurzen Impulsbreiten einhergeht.

Anstelle einer integrierten Prechirp-Einheit kann auch eine externe, ansteuerbare Chirp-Einheit verwendet werden, d.h. eine Chirp-Einheit, die außerhalb der Pulslaserlichtquelle angeordnet ist.

Der erste Laserimpuls und der zweite Laserimpuls können jeweils durch einen gaußförmigen Impuls angenähert werden, dessen normiertes elektrisches Feld E(z,T) durch folgende Beziehung gegeben ist:

$$E(z,T) = \exp\left(-\frac{(1+iC)T^2}{2T_o^2}\right)\exp^{-i(kz-\omega T)},$$

wobei der Steuerparameter derart festgelegt ist, dass die Größe $\dfrac{C}{T_0^2}$ für den ersten Laserimpuls und den zweiten Laserimpuls gleich ist. Nimmt man beispielsweise an, dass in einem CRSM-Verfahren der erste Laserimpuls variabler Wellenlänge durch einen Pump-Strahl und der zweite Laserimpuls fester Wellenlänge durch einen Stokes-Strahl gegeben ist, so wird die bestmögliche spektrale Fokussierung erzielt, wenn die Größe $\dfrac{C}{T_0^2}$ für beide Strahlen gleich ist. Sind die Kurzpulslaserlichtquelle und die auf den Pump-Strahl einwirkende separate Chirp-Einheit einmal charakterisiert, so sind die Verzögerung zwischen den beiden Strahlen, der Chirp-Parameter C und die jeweilige Impulsbreite $T_0$ als Funktion der variabel einstellbaren Wellenlänge sowie der möglichen Werte des Steuerparameters, mit dem die separate Chirp-Einheit angesteuert wird, bekannt. Auf Grundlage dieser Informationen können Kalibrierungsdaten beispielsweise in Form einer mehrdimensionalen Kalibrierungstabelle bereitgehalten werden, auf welche die Steuerung zugreift, um den Steuerparameter sowie die korrekte Verzögerung zwischen den beiden Laserimpulsen zu bestimmen, welche die bestmögliche spektrale Fokussierung ermöglichen.

Das vorstehend erläuterte Konzept zur Erzielung der bestmöglichen spektralen Fokussierung betrifft eine Ausführungsform, bei der lediglich in einem der beiden Lichtwege eine ansteuerbare Chirp-Einheit vorgesehen ist. Dieses Konzept ist jedoch auch auf Ausführungsformen anwendbar, bei denen sich in jedem der beiden Lichtwege jeweils eine ansteuerbare Chirp-Einheit befindet. Auch in diesem Fall lässt sich für jede der beiden ansteuerbaren Chirp-Einheiten der Steuerparameter erfindungsgemäß so bestimmen, dass die gewünschte spektrale Fokussierung erzielt wird.

Vorzugsweise wird eine Kalibrierung zum Ermitteln von Kalibrierungsdaten durchgeführt, auf deren Grundlage mittels der Steuerung der Steuerparameter bestimmt wird. Bei der Kalibrierung wird vorzugsweise sowohl für den ersten Laserimpuls als auch für den zweiten Laserimpuls ein Chirp-Parameter als Maß für die Chirp-Beaufschlagung des jeweiligen Laserimpulses durch die gemeinsame Chirp-Einheit ermittelt.

Die Kalibrierung sieht beispielsweise vor, zumindest den auf den ersten Laserimpuls bezogenen Chirp-Parameter zu bestimmen, indem die Impulsdauer des ersten Laserimpulses für vorgegebene Werte des Steuerparameters und für vorgegebene Werte der Wellenlänge des ersten Laserimpulses sowohl in dem ersten Lichtweg nach Durchlaufen der separaten Chirp-Einheit als auch in dem gemeinsamen Lichtweg nach Durchlaufen der gemeinsamen Chirp-Einheit gemessen, daraus eine Impulsdauerdifferenz ermittelt und auf Grundlage dieser Impulsdauerdifferenz der Chirp-Parameter berechnet wird. Für den Fall, dass auch der zweite Laserimpuls durch eine steuerbare Chirp-Einheit frequenzverändernd beeinflusst wird, erfolgt eine entsprechende Kalibrierung, um einen auf den zweiten Laserimpuls bezogenen Chirp-Parameter zu bestimmen.

Soll die Differenz der instantanen Frequenz des ersten Laserimpulses und der instantanen Frequenz des zweiten Laserimpulses, die während der zeitlichen Überlagerung der beiden Laserimpulse konstant ist, verändert werden, um beispielsweise in einem CRSM-Verfahren diese Frequenzdifferenz auf einen anzuregenden Schwingungszustand abzustimmen, so wird die Verzögerungsstufe, die einen der beiden Laserimpuls relativ zu dem anderen Laserimpuls verzögert, mit einem wellenlängenabhängigen Verzögerungsparameter angesteuert. Mithilfe dieses wellenlängenabhängigen Verzögerungsparameters lässt sich eine ausgezeichnete spektrale Selektivität des erfindungsgemäßen Verfahrens erzielen.

Der Verzögerungsparameter wird vorzugsweise auf Grundlage von weiteren Kalibrierungsdaten ermittelt, die bestimmt werden, indem die Verzögerung eines der beiden Laserimpulse relativ zu dem anderen Laserimpuls für vorgegebene Werte des Steuerparameters und vorgegebene Werte der Wellenlänge des ersten Laserimpulses ermittelt wird. Diese weiteren Kalibrierungsdaten können beispielsweise in Form einer Kalibrierungstabelle abgespeichert werden, auf welche die Steuerung bei Bedarf zugreift.

Die Erfindung im Folgenden anhand der Figuren näher erläutert. Darin zeigen:

Figur 1      ein Termschema zur Veranschaulichung einer CARS-Emission bei Anregung mit einem Pikosekundenlaser;

Figur 2      ein Termschema zur Veranschaulichung einer CARS-Emission bei Anregung mit einem Femtosekundenlaser;

Figur 3  eine schematische Darstellung zur Erläuterung der erfindungsgemäßen spektralen Fokussierung;

Figur 4  eine beispielhafte Ausführungsform der erfindungsgemäßen Einrichtung;

Figur 5  eine abgewandelte Ausführungsform der erfindungsgemäßen Einrichtung;

Figur 6  eine weitere abgewandelte Ausführungsform der erfindungsgemäßen Einrichtung;

Figur 7  eine weitere abgewandelte Ausführungsform der erfindungsgemäßen Einrichtung;

Figur 8  eine weitere abgewandelte Ausführungsform der erfindungsgemäßen Einrichtung;

Figur 9  eine weitere abgewandelte Ausführungsform der erfindungsgemäßen Einrichtung;

Figur 10  eine schematische Darstellung zur Veranschaulichung einer Beaufschlagung der Laserimpulse mit einem negativen Chirp;

Figur 11  eine erste Kalibrierungstabelle zur Bestimmung des Steuerparameters sowie eine zweite Kalibrierungstabelle zur Bestimmung des Verzögerungsparameters.

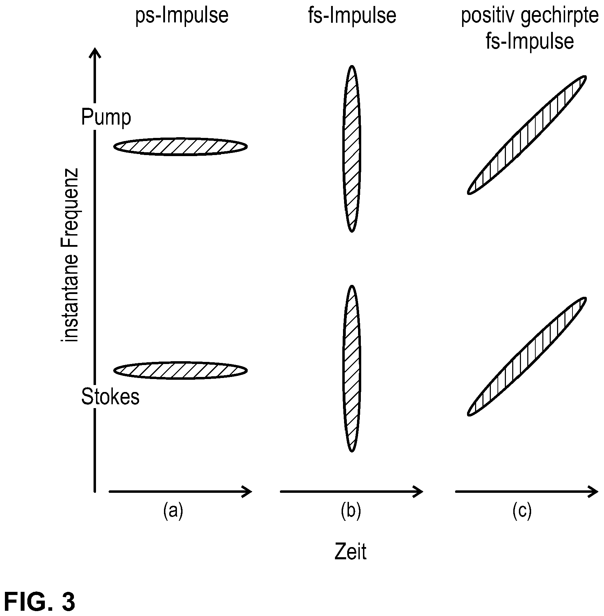

Anhand der Darstellung nach Figur 3 soll zunächst das Konzept der erfindungsgemäßen spektralen Fokussierung erläutert werden.

Figur 3 zeigt in den Teilbildern (a), (b) und (c) sowohl für einen Stokes-Laserimpuls als auch für einen Pump-Laserimpuls jeweils die instantane Frequenz in Abhängigkeit der Zeit. Dabei ist in dem Teilbild (a) ein Fall dargestellt, in dem der Stokes-Laserimpuls und der Pump-Laserimpuls von einem Pikosekundenlaser ausgegeben werden. Das Teilbild (b) zeigt einen Fall, in dem der Stokes-Laserimpuls und der Pump-Laserimpuls von einem Femtosekundenlaser ausgesendet werden, ohne dass eine Chirp-Beaufschlagung der beiden Laserimpulse erfolgt. Schließlich ist in dem Teilbild (c) ein Fall veranschaulicht, in dem der Stokes-Laserimpuls und der Pump-Laserimpuls wiederum von einem Femtosekundenlaser ausgesendet werden, nunmehr aber zudem mit einem positiven Chirp beaufschlagt werden.

Wie das Teilbild (a) der Figur 3 zeigt, haben die von dem Pikosekundenlaser ausgegebenen Laserimpulse eine vergleichsweise große zeitliche Impulsbreite. Dementsprechend ist die spektrale Breite des jeweiligen Laserimpulses, mit der die instantane Frequenz variiert, vergleichsweise gering. Somit ist die Differenz zwischen der instantanen Frequenz des Pump-Laserimpulses und der instantanen Frequenz des Stokes-Laserimpulses über die Zeit, während der die beiden Laserimpulse einander überlagert sind, weitgehend konstant. Dementsprechend liegt eine gute spektrale Fokussierung vor.

Wie das Teilbild (b) der Figur 3 zeigt, haben die von dem Femtosekundenlaser ausgesendeten Laserimpulse eine geringere zeitliche Impulsbreite und dementsprechend eine größere spektrale Breite. Somit gibt es während der zeitlichen Überlagerung der beiden Laserimpulse eine Vielzahl von Kombinationen zwischen möglichen instantanen Frequenzen des Pump-Laserimpulses und möglichen instantanen Frequenzen des Stokes-Laserimpulses. Durch diese Vielzahl an möglichen Frequenzkombinationen ergibt sich eine deutlich schlechtere spektrale Fokussierung.

Diese durch die Verwendung des Femtosekundenlasers verursachte Verschlechterung der spektralen Fokussierung wird in dem in dem Teilbild (c) der Figur 3 gezeigten Fall durch die Beaufschlagung der beiden Laserimpulse mit einem positiven Chirp beseitigt. So sorgt der positive Chirp für eine zeitliche Streckung der zeitlichen Impulsbreiten dergestalt, dass die Differenz zwischen der instantanen Frequenz des Pump-Laserimpulses und der instantanen Frequenz des Stokes-Laserimpulses während der zeitlichen Überlagerung der beiden Laserimpulse wiederum weitgehend konstant ist.

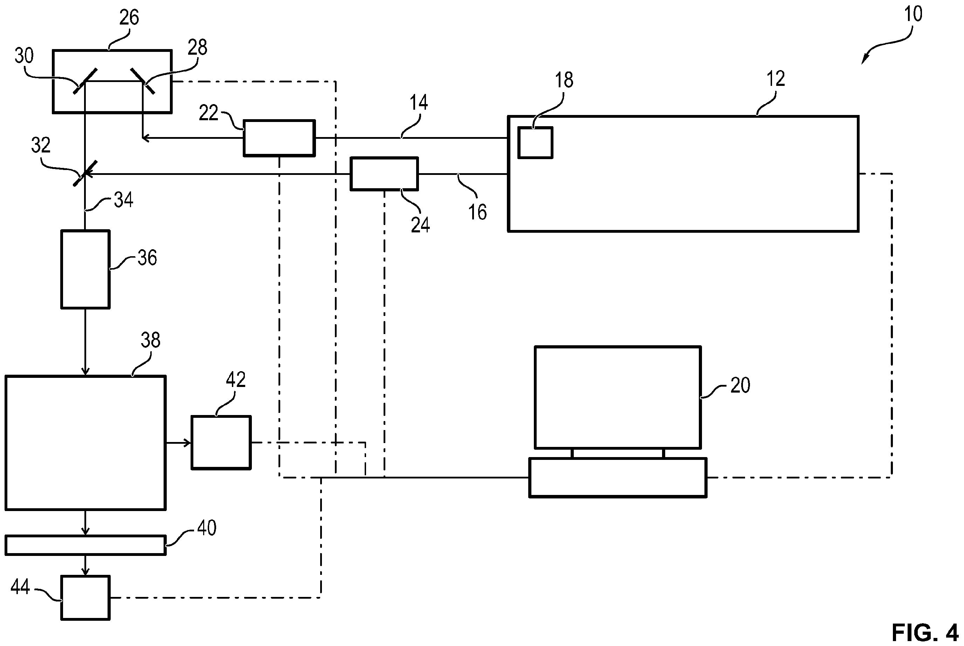

Figur 4 zeigt in schematischer Darstellung eine Einrichtung 10 als erfindungsgemäße Ausführungsform.

Die Einrichtung 10 enthält eine Pulslaserlichtquelle in Form eines Femtosekundenlasers 12. Der Femtosekundenlaser 12 hat zwei Ausgänge, über die er ein erstes Laserpulssignal längs eines ersten Lichtwegs 14 und ein zweites Laserpulssignal längs eines zweiten Lichtwegs 16 aussendet. In der vorliegenden Ausführungsform ist der Femtosekundenlaser 12 so ausgebildet, dass sich die Wellenlänge des aus einer Folge von ersten Laserimpulsen gebildeten ersten Laserpulssignals in einem vorbestimmten Wellenlängenbereich einstellen lässt. Demgegenüber wird das aus einer Folge von zweiten Laserimpulsen gebildete zweite Laserpulssignal von dem Femtosekundenlaser 12 mit einer festen Wellenlänge ausgesendet.

Der Femtosekundenlaser 12 enthält eine integrierte Chirp-Einheit 18, die beispielsweise aus gegeneinander beweglichen optischen Elementen wie z.B. Spiegeln oder Gittern gebildet ist. Die integrierte Chirp-Einheit 18 wird über eine Steuerung 20, z.B. einen mit dem Femtosekundenlaser 12 gekoppelten Computer, angesteuert. Diese Ansteuerung erfolgt über einen Steuerparameter, demgemäß die die Chirp-Einheit 18 bildenden optischen Elemente gegeneinander bewegt werden, um den jeweiligen ersten Laserimpuls in der gewünschten Weise frequenzverändernd zu beeinflussen, d.h. mit dem gewünschten Chirp zu beaufschlagen.

Der von dem Femtosekundenlaser 12 ausgesendete erste Laserimpuls durchläuft in dem ersten Lichtweg 14 ein mit der Steuerung 20 gekoppeltes optisches Element 22, welches die Lichtintensität moduliert bzw. regelt. Das optische Element 22 ist beispielsweise ein elektrooptischer oder akustooptischer Modulator, kurz EOM bzw. AOM, oder eine Kombination aus einem Halbwellenlängenplättchen und einem polarisierenden Strahlteiler. Entsprechend durchläuft der zweite Laserimpuls längs des zweiten Lichtwegs 16 ein entsprechend ausgebildetes zweites optisches Element 24.

In dem ersten Lichtweg 14 ist eine optische Verzögerungsstufe 26 angeordnet, die aus zwei gegeneinander beweglichen Spiegeln 28 und 30 gebildet ist. Die Verzögerungsstufe 30 ist ebenfalls mit der Steuerung 20 verbunden. Über die Steuerung 20 lässt sich der Abstand der beiden Spiegel 28 und 30 in Abhängigkeit eines Verzögerungsparameters einstellen, um den ersten Laserimpuls relativ zu dem zweiten Laserimpuls derart zu verzögern, dass zwischen diesen beiden Laserimpulsen eine zeitliche Überlagerung zustande kommt.

Der aus der Verzögerungsstufe 26 austretende erste Laserimpuls und der zweite Laserimpuls treffen auf einen dichroitischen oder polarisierenden Strahlteiler 32, der den ersten Lichtweg 14 und den zweiten Lichtweg 16 kollinear zu einem gemeinsamen Lichtweg 34 zusammenführt. Die beiden einander überlagerten Laserimpulse werden dann längs des gemeinsamen Lichtwegs 34 durch einen Glasblock 36 geleitet, der die beiden Laserimpulse zeitlich streckt. Anschließend werden die beiden Laserimpulse durch eine Optik 38, die beispielsweise eine konfokale Mikroskopoptik umfasst, auf eine Probe 40 geleitet.

Ein durch die Wechselwirkung des ersten und des zweiten Laserimpulses mit der Probe 40 erzeugtes Messsignal kann mittels eines Epi-Detektors 42 und/oder eines Vorwärts-Detektors 44 erfasst werden. Die beiden Detektoren 42 und 44 sind zum Zwecke der Ansteuerung und Auswertung mit der Steuerung 20 gekoppelt.

Der Glasblock 36 beeinflusst sowohl den ersten Laserimpuls als auch den zweiten Laserimpuls dergestalt, dass die beiden Laserimpulse zur zeitlichen Impulsstreckung mit einem positiven Chirp beaufschlagt werden. Die in dem Femtosekundenlaser 12 enthaltene, durch die Steuerung 20 ansteuerbare Chirp-Einheit 18 hat nun die Funktion, den Laserimpuls frequenzverändernd so zu beeinflussen, dass die beiden Laserimpulse an der Probe 40 in der Weise spektral fokussiert sind, wie dies in dem Teilbild (c) der Figur 3 veranschaulicht ist. Nimmt man beispielhaft an, dass die variable Wellenlänge des von dem Femtosekundenlaser 12 ausgesendeten ersten Laserimpulses kleiner als die feste Wellenlänge des zweiten Laserimpulses ist, so beaufschlagt die in dem Femtosekundenlaser 12 integrierte Chirp-Einheit 18 den ersten Laserimpuls mit einem negativen Chirp.

Der Steuerparameter, mit dem die Steuerung 20 die in dem Femtosekundenlaser 12 integrierte Chirp-Einheit 18 zur frequenzverändernden Beeinflussung des ersten Laserimpulses ansteuert, wird in später erläuterter Weise in Abhängigkeit der Wellenlänge des ersten Laserimpulses bestimmt.

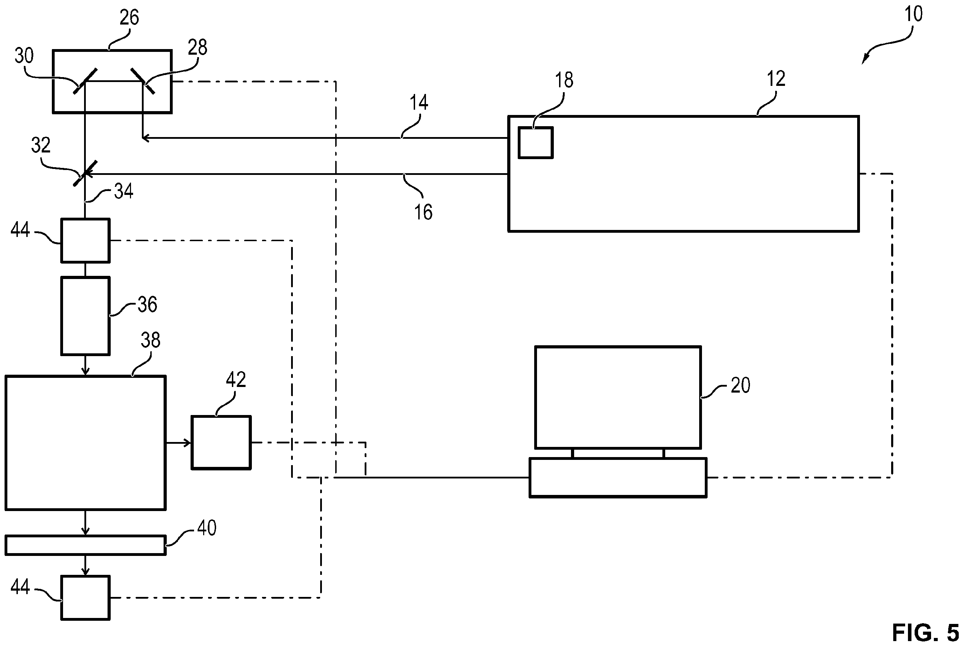

Unter Bezugnahme auf die Figuren 5 bis 9 werden im Folgenden Ausführungsformen beschrieben, die gegenüber der in Figur 4 gezeigten Ausführungsform abgewandelt sind. In diesen abgewandelten Ausführungsformen sind diejenigen Komponenten, die denen der Ausführungsform nach Figur 4 entsprechen, mit den in Figur 4 verwendeten Bezugszeichen versehen.

Die abgewandelte Ausführungsform nach Figur 5 unterscheidet sich von der Einrichtung nach Figur 4 dadurch, dass anstelle der optischen Elemente 22, 24, die in den separaten Lichtwegen 14 bzw. 16 angeordnet sind, ein in dem gemeinsamen Lichtweg 34 angeordnetes Element 44 vorgesehen ist. Das optische Element 44, das sowohl auf den ersten Laserimpuls als auch auf den zweiten Laserimpuls einwirkt, ist beispielsweise ein AOM oder EOM. Es kann auch als optisches Filter ausgeführt sein, z.B. als akustooptisch einstellbares Filter, kurz AOTF.

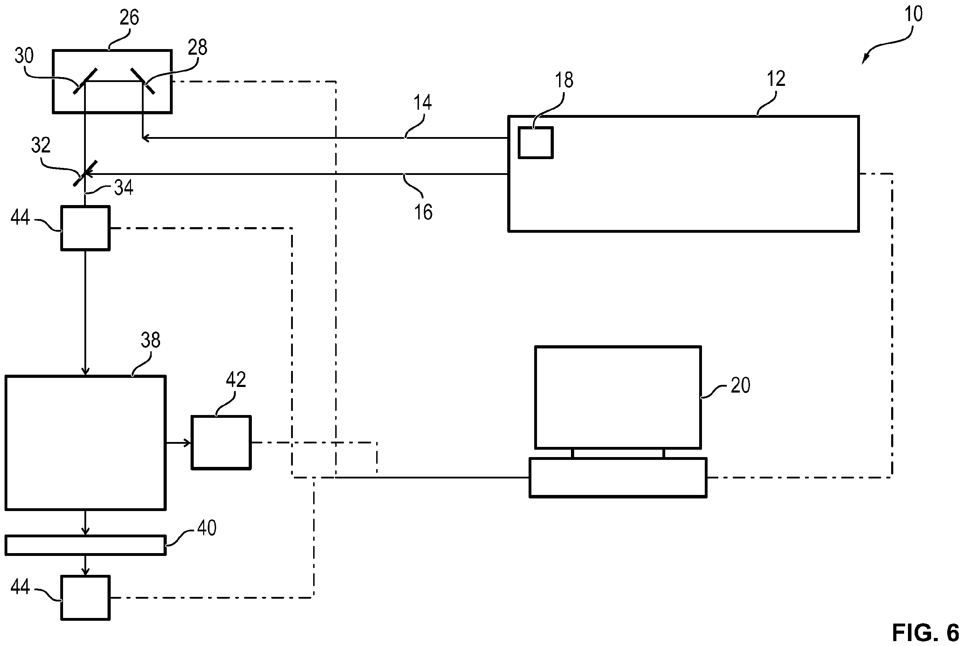

Die in Figur 6 gezeigte Ausführungsform unterscheidet sich von der Ausführungsform nach Figur 5 dadurch, dass der die beiden Laserimpulse in dem gemeinsamen Lichtweg mit einem positiven Chirp beaufschlagende Glasblock 36 weggelassen ist. In dieser Ausführungsform wirkt allein das optische Element 44, d.h. der AOM, EOM oder AOTF, als gemeinsames, auf die beiden Laserimpulse einwirkendes Chirp-Element. Demzufolge ist der durch das optische Element 44 bewirkte Chirp, d.h. die frequenzverändernde Beeinflussung der beiden Laserimpulse, so groß, dass keine weitere Chirp-Einheit in Form eines Glasblockes benötigt wird.

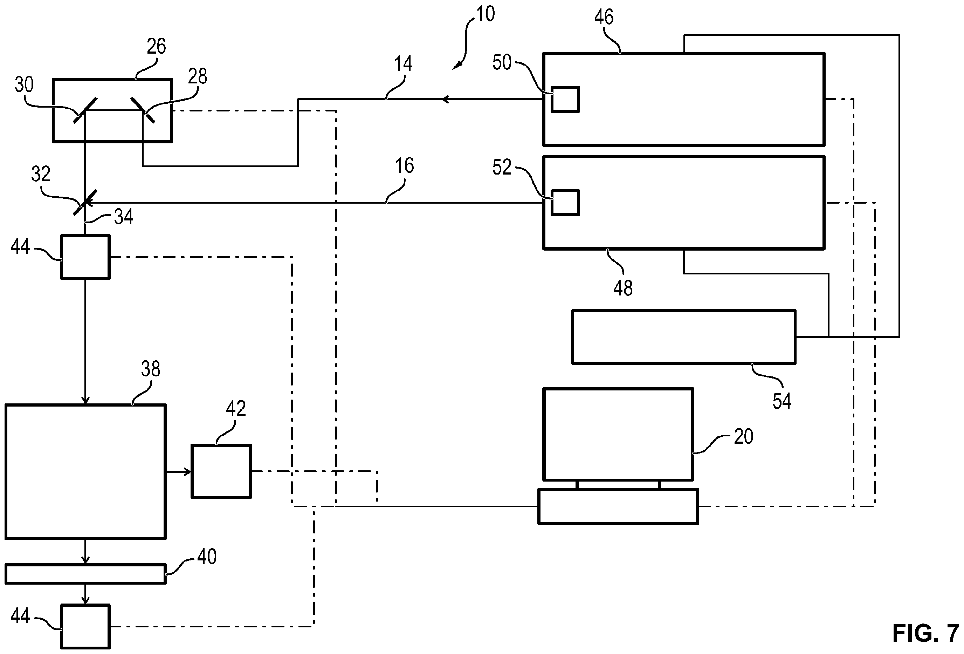

In der Ausführungsform nach Figur 7 sind anstelle des einzigen Femtosekundenlasers 12 zwei separate Femtosekundenlaser 46 und 48 vorgesehen, die jeweils eine integrierte Chirp-Einheit 50 bzw. 52 enthalten. Die Pulswiederholraten, mit denen die beiden Femtosekundenlaser 46, 48 den ersten bzw. den zweiten Laserimpuls aussenden, werden über eine Laser-Synchronisatonseinheit 54 gesteuert.

In der Ausführungsform nach Figur 7 werden die beiden integrierten Chirp-Einheiten 50, 52 über die Steuerung 20 wiederum so angesteuert, dass die bestmögliche spektrale Fokussierung gemäß Teilbild (c) der Figur 3 erzielt wird.

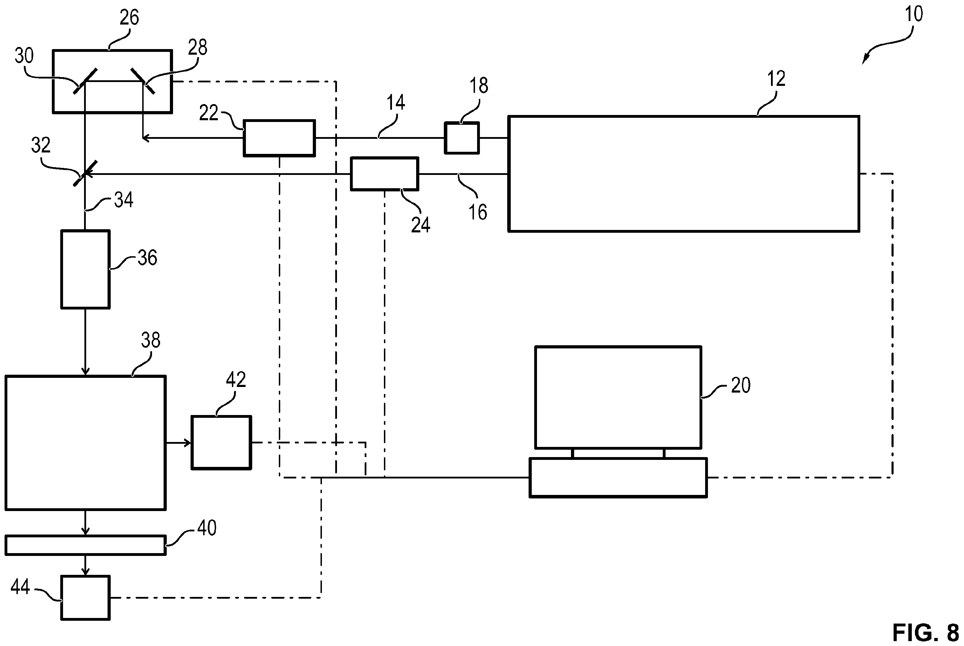

Die Ausführungsform nach Figur 8 unterscheidet sich von der in Figur 4 dargestellten Ausführungsform dadurch, dass die dem ersten Lichtweg 14 zugeordnete Chirp-Einheit 18 nicht als Prechirp-Einheit in dem Femtosekundenlaser 12 enthalten, sondern als externe Einheit außerhalb des Femtosekundenlasers 12 angeordnet ist. Die Ansteuerung der externen Chirp-Einheit 18 durch die Steuerung 20 erfolgt dabei in gleicher Weise wie bei der Ausführungsform nach Figur 4.

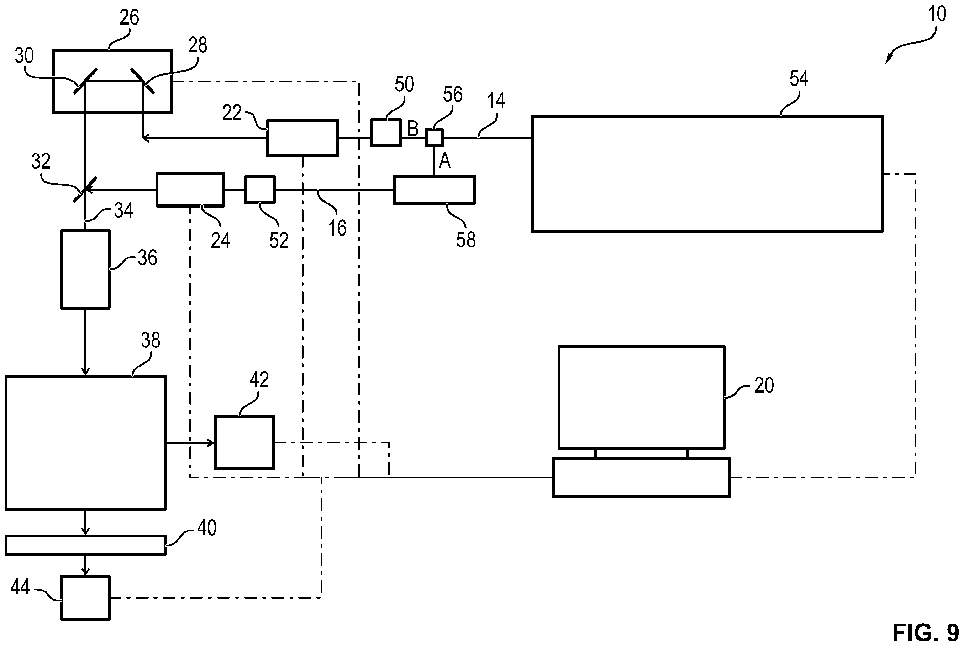

In der Ausführungsform nach Figur 9 sind, wie in der in Figur 7 dargestellten Ausführungsform, zwei ansteuerbare Chirp-Einheiten 50, 52 vorgesehen, wobei die Chirp-Einheit 50 dem ersten Lichtweg 14 und die Chirp-Einheit 52 dem zweiten Lichtweg 16 zugeordnet ist. Im Unterschied zur Ausführungsform nach Figur 7 sind in Figur 9 die Chirp-Einheiten 50, 52 jedoch als externe Einheiten ausgeführt. Außerdem sind nicht zwei separate Femtosekundenlaser, die über eine Laser-Synchronisationseinheit miteinander synchronisiert sind, vorgesehen, sondern ein einziger Femtosekundenlaser 54, der einen einzigen Laserausgang zur Ausgabe des ersten Laserimpulses aufweist. Der zweite Laserimpuls wird in dieser Ausführungsform dadurch erzeugt, dass in dem ersten Lichtweg 14 ein Strahlteiler 56 angeordnet ist, der auf einen optisch parametrischen Oszillator (OPO) oder Verstärker (OPA) 58 führt, der durch das von dem Femtosekundenlaser 12 ausgesendete Laserlicht gepumpt wird. Der optisch parametrische Oszillator bzw. Verstärker 58 gibt dann den zweiten Laserimpuls längs des zweiten Lichtwegs 16 aus.

Es versteht sich von selbst, dass die in den Figuren 4 bis 9 dargestellten Ausführungsformen lediglich beispielhaft zu verstehen sind. Insbesondere sind die in diesen Ausführungsformen vorgesehenen Abwandlungen in technisch sinnvoller Weise wechselweise miteinander kombinierbar.

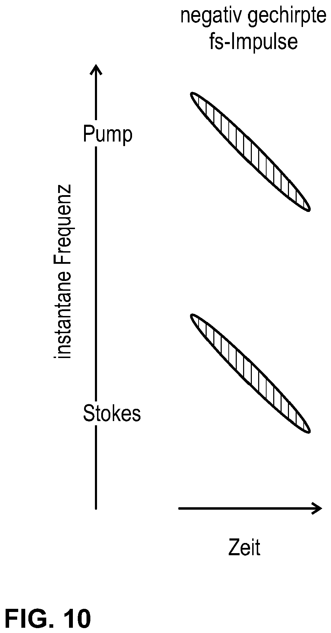

Für die vorstehend erläuterten Ausführungsformen wurde jeweils angenommen, dass durch die erfindungsgemäße Ansteuerung der dem ersten Lichtweg 14 und ggf. auch dem zweiten Lichtweg 16 zugeordneten Chirp-Einheit eine selektive Fokussierung bewirkt wird, wie sie in dem Teilbild (c) der Figur 3 dargestellt ist. Diese spektrale Fokussierung ist so gewählt, dass insgesamt ein positiver Chirp bewirkt wird. Die Erfindung ist jedoch nicht auf einen insgesamt positiven Chirp beschränkt, wie die Darstellung nach Figur 10 deutlich macht.

Für die Darstellung nach Figur 10 wird angenommen, dass die mindestens eine ansteuerbare Chirp-Einheit den bzw. die Laserimpulse mit einem negativen Chirp beaufschlagt, der so groß ist, dass der beispielsweise durch den Glasblock 36 und ggf. durch die weitere Optik 38 eingeführte positive Chirp so überkompensiert wird, dass die an der Probe 40 spektral fokussierten Laserimpulse insgesamt einen negativen Chirp aufweisen.

Um einen besonders anwenderfreundlichen Betrieb der erfindungsgemäßen Einrichtung 10 zu ermöglichen, werden der Steuerparameter, mit dem die Steuerung 20 die dem ersten Lichtweg 14 oder dem zweiten Lichtweg 16 zugeordnete Chirp-Einheit ansteuert, und der Verzögerungsparameter, mit dem die Steuerung 20 die Verzögerungsstufe 26 ansteuert, automatisch in Abhängigkeit der Wellenlänge des ersten und des zweiten Laserimpulses bestimmt. Hierzu werden im Vorfeld einige Kalibrierungsschritte durchgeführt, um entsprechende Kalibrierungsdaten, auf welche die Steuerung 20 zur Festlegung des Steuerparameters und des Verzögerungsparameters zugreift, bereitzuhalten.

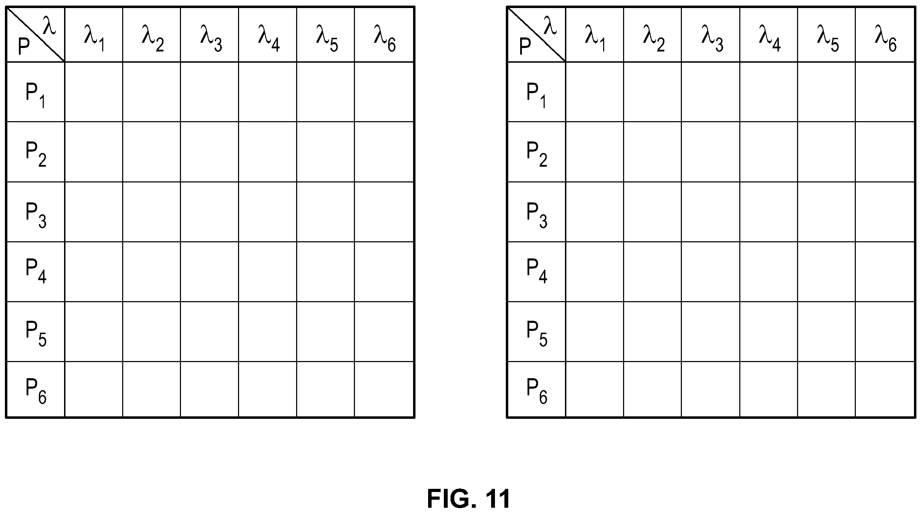

Figur 11 zeigt rein beispielhaft eine Bereitstellung solcher Kalibrierungsdaten in Form von Kalibrierungstabellen.

Die linke Tabelle in Figur 11 stellt eine Matrix dar, in der für vorgegebene Werte $\lambda_1$ bis $\lambda_6$ der Wellenlänge des Laserimpulses und vorgegebene Werte $P_1$ bis $P_6$ des Steuerparameters jeweils die gemessene zeitliche Impulsbreite einzutragen ist. Die Impulsbreite wird beispielsweise mit Hilfe einer Autokorrelationseinheit gemessen.

Die jeweilige Impulsbreite wird dabei zweimal gemessen, nämlich zum ersten in dem ersten bzw. zweiten Lichtweg 14, 16 unmittelbar nach Durchlaufen der diesem Lichtweg zugeordneten ansteuerbaren Chirp-Einheit und zum zweiten in dem gemeinsamen Lichtweg 34 nach Durchlaufen der Optik 38 oder, falls der durch die Optik 38 verursachte Chirp vernachlässigbar ist, nach Durchlaufen des Glasblocks 36 (bzw. des an die Stelle des Glasblocks 36 tretenden optischen Elementes 44). Basierend auf diesen beiden Messungen kann der an der Probe 40 eingeführte Chirp auf einfache Weise als Funktion der Wellenlänge $\lambda$ und des Steuerparameters P berechnet werden.

Auf Grundlage des Ergebnisses der vorstehend erläuterten Messungen kann der Steuerparameter P für einen vorgegebenen Wert der variablen Wellenlänge $\lambda$ so bestimmt werden, dass die gewünschte spektrale Fokussierung erzielt wird.

Die rechte Tabelle in Figur 11 zeigt eine Kalibrierungstabelle in Form einer Matrix, in der für vorgegebene Werte $\lambda_1$ bis $\lambda_6$ der variablen Wellenlänge $\lambda$ und für vorgegebene Werte $P_1$ bis $P_6$ des Steuerparameters P die durch eine Kalibrierungsmessung gewonnenen Werte für die relative Verzögerung der beiden Laserimpulse an der Probe 40 einzutragen sind. Auf Grundlage dieser Kalibrierungstabelle kann die Steuerung 20 für einen vorgegebenen Wert der variablen Wellenlänge $\lambda$ in einfacher Weise den korrekten Verzögerungsparameter bestimmen.

Die in vorstehend erläuterter Weise ermittelten Kalibrierungsdaten werden beispielsweise in einer in der Steuerung 20 vorgehaltenen Kalibrierungsdatei abgespeichert und bei Bedarf abgerufen, um abhängig von der gewählten Wellenlänge den korrekten Steuerparameter zur Ansteuerung der jeweiligen Chirp-Einheit sowie den korrekten Verzögerungsparameter zur Ansteuerung der Verzögerungsstufe 26 zu ermitteln.

## Patentansprüche

1. Einrichtung (10) zum Beleuchten einer Probe (40), mit
   mindestens einer Pulslaserlichtquelle (12) zum wiederholten Aussenden eines ersten Laserimpulses längs eines ersten Lichtwegs (14) und eines zweiten Laserimpulses längs eines von dem ersten Lichtweg räumlich getrennten zweiten Lichtwegs (16);
   einem Überlagerungselement (32) zur kollinearen Überlagerung der beiden Laserimpulse in einem gemeinsamen Lichtweg (34);
   einer in dem ersten oder dem zweiten Lichtweg (14, 16) angeordneten Verzögerungsstufe (26) zum Verzögern eines der beiden Laserimpulse relativ zu dem anderen Laserimpuls derart, dass die beiden längs des gemeinsamen Lichtwegs (34) auf die Probe (40) gesendeten Laserimpulse eine zeitliche Überlagerung aufweisen;
   einer in dem gemeinsamen Lichtweg (34) angeordneten gemeinsamen Chirp-Einheit (36) zur frequenzverändernden Beeinflussung sowohl des ersten Laserimpulses als auch des zweiten Laserimpulses; und

mindestens einer in dem ersten Lichtweg (14) angeordneten separaten Chirp-Einheit (18) zur frequenzverändernden Beeinflussung allein des ersten Laserimpulses;

wobei die gemeinsame Chirp-Einheit (36) und die separate Chirp-Einheit (18) zur Erzielung eines Sollzustands aufeinander abgestimmt sind, in dem die Differenz zwischen einer instantanten Frequenz des sowohl durch die separate Chirp-Einheit (18) als auch durch die gemeinsame Chirp-Einheit (36) beeinflussten ersten Laserimpulses und einer instantanen Frequenz des allein durch die gemeinsame Chirp-Einheit (36) beeinflussten zweiten Laserimpulses während der zeitlichen Überlagerung der beiden Laserimpulse konstant ist;

**dadurch gekennzeichnet, dass** zumindest die Wellenlänge des ersten Laserimpulses mittels der Pulslaserlichtquelle (12) in einem vorbestimmten Wellenlängenbereich variierbar ist; und

die separate Chirp-Einheit (18) mit einer Steuerung (20) gekoppelt ist, durch welche die separate Chirp-Einheit (18) mit einem von der Wellenlänge des ersten Laserimpulses abhängigen Steuerparameter zum Einstellen des Sollzustandes ansteuerbar ist.

2. Einrichtung (10) nach Anspruch 1, **dadurch gekennzeichnet, dass** die gemeinsame Chirp-Einheit aus einem optischen Modulator oder einem optischen Filter (44) gebildet ist.

3. Einrichtung (10) nach einem der vorhergehenden Ansprüche, **gekennzeichnet durch** eine zusätzliche separate Chirp-Einheit (52), die zur frequenzverändernden Beeinflussung allein des zweiten Laserimpulses in dem zweiten Lichtweg (16) ansteuerbar ist.

4. Einrichtung (10) nach einem der vorhergehenden Ansprüche, **dadurch gekennzeichnet, dass** die mindestens eine separate, ansteuerbare Chirp-Einheit (18, 50, 52) in der Pulslaserlichtquelle (12) enthalten ist.

5. Einrichtung (10) nach einem Ansprüche 1 bis 4, **dadurch gekennzeichnet, dass** die mindestens eine separate, ansteuerbare Chirp-Einheit (18, 50, 52) außerhalb der Pulslaserlichtquelle (12) angeordnet.

6. Einrichtung (10) nach einem der vorhergehenden Ansprüche, **gekennzeichnet durch** zwei Pulslaserlichtquellen (46, 48, 54, 58), von denen eine erste (46, 54) dem ersten Lichtweg (14) und eine zweite (48, 58) dem zweiten Lichtweg (16) zugeordnet ist.

7. Einrichtung (10) nach einem der vorhergehenden Ansprüche, **dadurch gekennzeichnet, dass** eine der beiden Pulslaserlichtquellen aus einem optisch parametrischen Oszillator oder Verstärker (58) gebildet, der über einen Strahlteiler (56) mit einem Laserausgang der anderen Pulslaserlichtquelle (54) gekoppelt ist.

8. Einrichtung (10) nach einem der vorhergehenden Ansprüche, **dadurch gekennzeichnet, dass** die separate Chirp-Einheit (18) zum Einstellen des Sollzustands derart ansteuerbar ist, dass die Impulsbreite des ersten Laserimpulses an der Probe größer als eine mittels der separaten Chirp-Einheit (18) kleinstmöglich einstellbare Impulsbreite ist.

9. Verfahren zum Beleuchten einer Probe (40), bei dem mittels mindestens einer Pulslaserlichtquelle (12) wiederholt ein erster Laserimpuls längs eines ersten Lichtwegs (14) und ein zweiter Laserimpuls längs eines von dem ersten Lichtweg (14) räumlich getrennten zweiten Lichtwegs (16) ausgesendet werden;

die beiden Laserimpulse kollinear in einem gemeinsamen Lichtweg überlagert werden;

einer der beiden Laserimpulse relativ zu dem anderen Laserimpuls derart verzögert wird, dass die beiden längs des gemeinsamen Lichtwegs (34) auf die Probe (40) gesendeten Laserimpulse eine zeitliche Überlagerung aufweisen;

mittels einer in dem gemeinsamen Lichtweg (34) angeordneten gemeinsamen Chirp-Einheit (36) sowohl der erste Laserimpuls als auch der zweite Laserimpuls frequenzverändernd beeinflusst werden; und

mittels mindestens einer in dem ersten Lichtweg (14) angeordneten separaten Chirp-Einheit (18) allein der erste Laserimpuls frequenzverändernd beeinflusst wird;

wobei die separate Chirp-Einheit (18) und die gemeinsame Chirp-Einheit (36) zur Erzielung eines Sollzustands aufeinander abgestimmt werden, in dem die Differenz zwischen einer instantanen Frequenz des sowohl durch die separate Chirp-Einheit (18) als auch durch die gemeinsame Chirp-Einheit (36) beeinflussten ersten Laserimpulses und einer instantanen Frequenz des allein durch die gemeinsame Chirp-Einheit (36) beeinflussten zweiten Laserimpulses während der zeitlichen Überlagerung der beiden Laserimpulse weitgehend konstant ist;

**dadurch gekennzeichnet, dass** zumindest die Wellenlänge des ersten Laserimpulses mittels der Pulslaserlichtquelle (12) in einem vorbestimmten Wellenlängenbereich variiert wird; und

die separate Chirp-Einheit (18) mittels einer Steuerung (20) mit einem von der Wellenlänge des ersten Laserimpulses abhängigen Steuerparameter zum Einstellen des Sollzustands angesteuert wird.

10. Verfahren nach Anspruch 9, **dadurch gekennzeichnet, dass** der erste Laserimpuls und der zweite Laserpuls jeweils durch einen gaussförmigen Impuls angenähert werden, dessen normiertes elektrisches Feld E(z,T) durch folgende Beziehung gegeben ist:

$$E(z,T) = \exp\left(-\frac{(1+iC)T^2}{2T_o^2}\right)\exp^{-i(kz-\omega T)},$$

worin

z eine Raumkoordinate in Ausbreitungsrichtung des jeweiligen Laserimpulses, T die Zeit,
C einen Chirp-Parameter,
$T_0$ die Impulsdauer bezogen auf das $e^{-1}$-fache des Maximalwertes des elektrischen Feldes,
k die Wellenzahl und
$\omega$ die Frequenz bezeichnet, und
der Steuerparameter derart festgelegt wird,

dass die Größe $\dfrac{C}{T_0^2}$ für den ersten Laserimpuls und den zweiten Laserimpuls gleich ist.

11. Verfahren nach Anspruch 9 oder 10, **dadurch gekennzeichnet, dass** eine Kalibrierung zum Ermitteln von Kalibrierungsdaten durchgeführt wird, auf deren Grundlage mittels der Steuerung (20) der Steuerparameter bestimmt wird.

12. Verfahren nach Anspruch 11, **dadurch gekennzeichnet, dass** bei der Kalibrierung sowohl für den ersten Laserimpuls als auch für den zweiten Laserimpuls ein Chirp-Parameter als Maß für die Chirp-Beaufschlagung des jeweiligen Laserimpulses durch die gemeinsame Chirp-Einheit (36) ermittelt wird.

13. Verfahren nach Anspruch 12, **dadurch gekennzeichnet, dass** zumindest der auf den ersten Laserimpuls bezogene Chirp-Parameter bestimmt wird, indem die Impulsdauer des ersten Laserimpulses für vorgegebene Werte des Steuerparameters und für vorgegebene Werte der Wellenlänge des ersten Laserimpulses sowohl in dem ersten Lichtweg (14) nach Durchlaufen der separaten Chirp-Einheit (18) als auch in dem gemeinsamen Lichtweg (34) nach Durchlaufen der gemeinsamen Chirp-Einheit (36) gemessen, daraus eine Impulsdauerdifferenz ermittelt und auf Grundlage dieser Impulsdauerdifferenz der Chirp-Parameter berechnet wird.

14. Verfahren nach einem der Ansprüche 9 bis 13, **dadurch gekennzeichnet, dass** die Verzögerungsstufe (26) mittels der Steuerung (20) mit einem von der Wellenlänge des ersten Laserimpulses abhängigen Verzögerungsparameter angesteuert wird.

15. Verfahren nach Anspruch 14, **dadurch gekenn-**

**zeichnet, dass** der Verzögerungsparameter auf Grundlage von weiteren Kalibrierungsdaten ermittelt wird, die bestimmt werden, indem die Verzögerung eines der beiden Laserimpulse relativ zu dem anderen Laserimpuls für vorgegebene Werte des Steuerparameters und für vorgegebene Werte der Wellenlänge des ersten Laserimpulses ermittelt wird.

16. Verfahren nach einem der Ansprüche 9 bis 15, **dadurch gekennzeichnet, dass** die separate Chirp-Einheit (18) zum Einstellen des Sollzustands derart angesteuert wird, dass die Impulsbreite des ersten Laserimpulses an der Probe größer als eine mittels der separaten Chirp-Einheit (18) kleinstmöglich einstellbare Impulsbreite ist.

**Claims**

1. Apparatus (10) for illuminating a sample (40), having at least one pulsed laser light source (12) for repeatedly emitting a first laser pulse along a first optical path (14) and a second laser pulse along a second optical path (16) which is spatially separate from the first optical path;
a superposition element (32) for collinear superposition of the two laser pulses in a common optical path (34);
a delay stage (26), arranged in the first or the second optical path (14, 16), for delaying one of the two laser pulses relative to the other laser pulse in such a way that the two laser pulses emitted along the common optical path (34) onto the sample (40) have a temporal superposition;
a common chirp unit (36), arranged in the common optical path (34), for modifying the frequency both of the first laser pulse and of the second laser pulse; and
at least one separate chirp unit (18), arranged in the first optical path (14), for modifying the frequency solely of the first laser pulse;
wherein the common chirp unit (36) and the separate chirp unit (18) are matched with each other for achieving a desired state, in which the difference between an instantaneous frequency of the first laser pulse, modified both by the separate chirp unit (18) and by the common chirp unit (36), and an instantaneous frequency of the second laser pulse, modified solely by the common chirp unit (36), is constant during the temporal superposition of the two laser pulses;
**characterized in that** at least the wavelength of the first laser pulse is variable in a predetermined wavelength range using the pulsed laser light source (12); and
the separate chirp unit (18) is coupled to a controller (20), by means of which the separate chirp unit (18) is actuatable with a control parameter, dependent on the wavelength of the first laser pulse, for setting the desired state.

2. Apparatus (10) according to Claim 1, **characterized in that** the common chirp unit is formed of an optical modulator or an optical filter (44).

3. Apparatus (10) according to any of the preceding claims, **characterized by** an additional separate chirp unit (52), which is actuatable for modifying the frequency solely of the second laser pulse in the second optical path (16).

4. Apparatus (10) according to any of the preceding claims, **characterized in that** the at least one separate, actuatable chirp unit (18, 50, 52) is included in the pulsed laser light source (12).

5. Apparatus (10) according to any of Claims 1 to 4, **characterized in that** the at least one separate, actuatable chirp unit (18, 50, 52) is arranged outside the pulsed laser light source (12).

6. Apparatus (10) according to any of the preceding claims, **characterized by** two pulsed laser light sources (46, 48, 54, 58), of which a first (46, 54) is assigned to the first optical path (14) and a second (48, 58) is assigned to the second optical path (16).

7. Apparatus (10) according to any of the preceding claims, **characterized in that** one of the two pulsed laser light sources is formed of an optical parametric oscillator or amplifier (58), which is coupled to a laser output of the other pulsed laser light source (54) via a beam splitter (56).

8. Apparatus (10) according to any of the preceding claims, **characterized in that** the separate chirp unit (18) is actuatable for setting the desired state in such a way that the pulse width of the first laser pulse at the sample is greater than a smallest possible pulse width that can be set using the separate chirp unit (18).

9. Method for illuminating a sample (40), with which a first laser pulse is repeatedly emitted along a first optical path (14) and a second laser pulse is repeatedly emitted along a second optical path (16), which is spatially separate from the first optical path (14), using at least one pulsed laser light source (12); the two laser pulses are superposed collinearly in a common optical path; one of the two laser pulses is delayed relative to the other laser pulse in such a way that the two laser pulses emitted along the common optical path (34) onto the sample (40) have a temporal superposition; the frequencies of both the first laser pulse and the second laser pulse are modified using a common chirp unit (36) arranged in the common optical path (34); and

the frequency of solely the first laser pulse is modified using at least one separate chirp unit (18) arranged in the first optical path (14); wherein the separate chirp unit (18) and the common chirp unit (36) are matched with each other for achieving a desired state, in which the difference between an instantaneous frequency of the first laser pulse, modified both by the separate chirp unit (18) and by the common chirp unit (36), and an instantaneous frequency of the second laser pulse, modified solely by the common chirp unit (36), is substantially constant during the temporal superposition of the two laser pulses; **characterized in that** at least the wavelength of the first laser pulse is varied in a predetermined wavelength range using the pulsed laser light source (12); and

using a controller (20), the separate chirp unit (18) is actuated with a control parameter, dependent on the wavelength of the first laser pulse, for setting the desired state.

10. Method according to Claim 9, **characterized in that** the first laser pulse and the second laser pulse are respectively approximated by a gaussian pulse, whose normalized electric field E(z,T) is given by the following expression:

$$E(z,T) = \exp\left(-\frac{(1+iC)T^2}{2T_o^2}\right)\exp^{-i(kz-\omega T)} ,$$

where

z is a spatial coordinate in the propagation direction of the respective laser pulse,
T is the time,
C is a chirp parameter,
$T_0$ is the pulse duration relating to $e^{-1}$ times the maximum value of the electric field,
k is the wavenumber and
$\omega$ is the frequency, and
the control parameter is fixed in such a way that

the quantity $\dfrac{C}{T_0^2}$ is equal for the first laser pulse and the second laser pulse.

11. Method according to Claim 9 or 10, **characterized in that** a calibration is carried out for determining calibration data, on the basis of which the control parameter is ascertained using the controller (20).

12. Method according to Claim 11, **characterized in**

**that**, during the calibration, a chirp parameter is determined both for the first laser pulse and for the second laser pulse as a measure of the application of chirp to the respective laser pulse by the common chirp unit (36).

13. Method according to Claim 12, **characterized in that** at least the chirp parameter respective to the first laser pulse is ascertained by virtue of the pulse duration of the first laser pulse being measured for prespecified values of the control parameter and for prespecified values of the wavelength of the first laser pulse both in the first optical path (14), after passing through the separate chirp unit (18), and in the common optical path (34), after passing through the common chirp unit (36), hence a pulse duration difference is determined and, on the basis of this pulse duration difference, the chirp parameter is calculated.

14. Method according to any of Claims 9 to 13, **characterized in that** the delay stage (26) is actuated using the controller (20) with a delay parameter which is dependent on the wavelength of the first laser pulse.

15. Method according to Claim 14, **characterized in that** the delay parameter is determined on the basis of further calibration data which are ascertained by virtue of the delay of one of the two laser pulses relative to the other laser pulse being determined for prespecified values of the control parameter and for prespecified values of the wavelength of the first laser pulse.

16. Method according to any of Claims 9 to 15, **characterized in that** the separate chirp unit (18) is actuated for setting the desired state in such a way that the pulse width of the first laser pulse at the sample is greater than a smallest possible pulse width that can be set using the separate chirp unit (18).

**Revendications**

1. Dispositif (10) pour éclairer un échantillon (40), comprenant
au moins une source de lumière laser puisée (12) destinée à l'émission répétée d'une première impulsion laser le long d'un premier trajet de lumière (14) et d'une deuxième impulsion laser le long d'un deuxième trajet de lumière (16) séparé dans l'espace du premier trajet de lumière ;
un segment de superposition (32) destiné à la superposition colinéaire des deux impulsions laser dans un trajet de lumière commun (34) ;
un étage de retard (26) disposé dans le premier ou le deuxième trajet de lumière (14, 16), destiné à retarder l'une des deux impulsions laser par rapport à l'autre impulsion laser de telle sorte que les deux impulsions laser envoyées sur l'échantillon (40) le long du trajet de lumière commun (34) présentent une superposition temporelle ;
une unité de fluctuation commune (36) disposée dans le trajet de lumière commune (34) destinée à influencer par variation de fréquence à la fois la première impulsion laser et la deuxième impulsion laser ; et
au moins une unité de fluctuation séparée (18) disposée dans le premier trajet de lumière (14) destinée à influencer par variation de fréquence la seule première impulsion laser ;
l'unité de fluctuation commune (36) et l'unité de fluctuation séparée (18) étant accordées l'une sur l'autre en vue d'obtenir un état de consigne, dans lequel la différence entre une fréquence instantanée de la première impulsion laser, influencée à la fois par l'unité de fluctuation séparée (18) et par l'unité de fluctuation commune (36), et une fréquence instantanée de la deuxième impulsion influencée uniquement par l'unité de fluctuation commune (36) pendant la superposition temporelle des deux impulsions laser est constante ;
**caractérisé en ce qu'**au moins la longueur d'onde de la première impulsion laser peut être variée au moyen de la source de lumière laser puisée (12) dans une plage de longueurs d'onde prédéterminée ; et
l'unité de fluctuation séparée (18) est connectée à une commande (20) par le biais de laquelle l'unité de fluctuation séparée (18) peut être commandée avec un paramètre de commande dépendant de la longueur d'onde de la première impulsion laser en vue de régler l'état de consigne.

2. Dispositif (10) selon la revendication 1, **caractérisé en ce que** l'unité de fluctuation commune est formée à partir d'un modulateur optique ou d'un filtre optique (44).

3. Dispositif (10) selon l'une des revendications précédentes, **caractérisé par** une unité de fluctuation séparée supplémentaire (52), qui peut être commandée pour influencer par variation de fréquence la seule deuxième impulsion laser dans le deuxième trajet de lumière (16).

4. Dispositif (10) selon l'une des revendications précédentes, **caractérisé en ce que** l'au moins une unité de fluctuation séparée (18, 50, 52) commandable est contenue dans la source de lumière laser puisée (12).

5. Dispositif (10) selon l'une des revendications 1 à 4, **caractérisé en ce que** l'au moins une unité de fluctuation séparée (18, 50, 52) commandable est disposée en-dehors de la source de lumière laser puisée (12).

6. Dispositif (10) selon l'une des revendications précédentes, **caractérisé par** deux sources de lumière laser puisée (46, 48, 54, 58), parmi lesquelles une première (46, 54) est associée au premier trajet de lumière (14) et une deuxième (48, 58) au deuxième trajet de lumière (16).

7. Dispositif (10) selon l'une des revendications précédentes, **caractérisé en ce que** l'une des deux sources de lumière laser puisée est formée à partir d'un oscillateur ou d'un amplificateur paramétrique optique (58), lequel est connecté à une sortie laser de l'autre source de lumière laser puisée (54) par le biais d'un diviseur de faisceau (56).

8. Dispositif (10) selon l'une des revendications précédentes, **caractérisé en ce que** die l'unité de fluctuation séparée (18) peut être commandée pour régler l'état de consigne de telle sorte que la largeur d'impulsion de la première impulsion laser au niveau de l'échantillon est supérieure à une plus petite largeur d'impulsion réglable au moyen de l'unité de fluctuation séparée (18).

9. Procédé pour éclairer un échantillon (40), avec lequel, au moyen d'au moins une source de lumière laser pulsée (12), a lieu l'émission répétée d'une première impulsion laser le long d'un premier trajet de lumières (14) et d'une deuxième impulsion laser le long d'un deuxième trajet de lumières (16), séparé dans l'espace du premier trajet de lumière (14) ;
les deux impulsions laser sont superposées de manière colinéaire dans un trajet de lumière commun ;
l'une des deux impulsions laser est retardée par rapport à l'autre impulsion laser de telle sorte que les deux impulsions laser envoyées sur l'échantillon (40) le long du trajet de lumière commun (34) présentent une superposition temporelle ;
la première impulsion laser et la deuxième impulsion laser sont toutes deux influencées par variation de fréquence au moyen d'une unité de fluctuation commune (36) disposée dans le trajet de lumière commune (34) ; et
seule la première impulsion laser est influencée par variation de fréquence au moyen d'au moins une unité de fluctuation séparée (18) disposée dans le premier trajet de lumière (14) ;
l'unité de fluctuation séparée (18) et l'unité de fluctuation commune (36) étant accordées l'une sur l'autre en vue d'obtenir un état de consigne, dans lequel la différence entre une fréquence instantanée de la première impulsion laser, influencée à la fois par l'unité de fluctuation séparée (18) et par l'unité de fluctuation commune (36), et une fréquence instantanée de la deuxième impulsion influencée uniquement par l'unité de fluctuation commune (36) pendant la superposition temporelle des deux impulsions laser est constante ;
**caractérisé en ce qu'**au moins la longueur d'onde de la première impulsion laser peut être variée au moyen de la source de lumière laser pulsée (12) dans une plage de longueurs d'onde prédéterminée ; et
l'unité de fluctuation séparée (18) est commandée au moyen d'une commande (20) avec un paramètre de commande dépendant de la longueur d'onde de la première impulsion laser en vue de régler l'état de consigne.

10. Procédé selon la revendication 9, **caractérisé en ce que** la première impulsion laser et la deuxième impulsion laser sont respectivement approchées par une impulsion gaussienne dont le champ électrique normalisé E(z,T) est donné par la relation suivante :

$$ E(z,T) = \exp\left( -\frac{(1+iC)T^2}{2T_o^2} \right) \exp^{-i(kz-\omega T)} \ , $$

où

z désigne une coordonnée spatiale dans la direction de propagation de l'impulsion laser respective,
T le temps,
C un paramètre de fluctuation,
$T_0$ la durée d'impulsion rapportée à la fraction $e^{-1}$ de la valeur maximale du champ électrique,
k le numéro d'onde et
$\omega$ la fréquence, et
le paramètre de commande est fixé de telle sorte

que la grandeur $\dfrac{C}{T_0^2}$ pour la première impulsion et la deuxième impulsion laser est la même.

11. Procédé selon la revendication 9 ou 10, **caractérisé en ce qu'**un étalonnage destiné à identifier des données d'étalonnage est effectué, sur la base duquel le paramètre de commande est déterminé au moyen de la commande (20).

12. Procédé selon la revendication 11, **caractérisé en ce que** lors de l'étalonnage, un paramètre de fluctuation est identifié à la fois pour la première impulsion laser et pour la deuxième impulsion laser en tant que mesure pour la sollicitation par fluctuation de l'impulsion laser respective par l'unité de fluctuation commune (36) .

13. Procédé selon la revendication 12, **caractérisé en ce qu'**au moins le paramètre de fluctuation rapporté à la première impulsion laser est déterminé en mesurant la durée d'impulsion de la première impulsion laser pour des valeurs prédéfinies du paramètre de commande et pour des valeurs prédéfinies de la longueur d'onde de la première impulsion laser à la fois dans le premier trajet de lumière (14) après avoir traversé l'unité de fluctuation séparée (18) et dans le trajet de lumière commune (34) après avoir traversé l'unité de fluctuation commune (36), en identifiant à partir de celle-ci une différence de durée d'impulsion et en calculant le paramètre de fluctuation sur la base de cette différence de durée d'impulsion.

14. Procédé selon l'une des revendications 9 à 13, **caractérisé en ce que** l'étage de retard (26) est commandé au moyen de la commande (20) avec un paramètre de retard dépendant de la longueur d'onde de la première impulsion laser.

15. Procédé selon la revendication 14, **caractérisé en ce que** le paramètre de retard est identifié sur la base de données d'étalonnage supplémentaires, lesquelles sont déterminées en identifiant le retard de l'une des deux impulsions laser par rapport à l'autre impulsion laser pour des valeurs prédéfinies du paramètre de commande et pour des valeurs prédéfinies de la longueur d'onde de la première impulsion laser.

16. Procédé selon l'une des revendications 9 à 15, **caractérisé en ce que** l'unité de fluctuation séparée (18) est commandée pour régler l'état de consigne de telle sorte que la largeur d'impulsion de la première impulsion laser au niveau de l'échantillon est supérieure à une plus petite largeur d'impulsion réglable au moyen de l'unité de fluctuation séparée (18).

FIG. 1

FIG. 2

FIG. 3

FIG. 4

FIG. 5

EP 3 071 952 B1

FIG. 6

EP 3 071 952 B1

FIG. 7

EP 3 071 952 B1

**FIG. 8**

FIG. 9

EP 3 071 952 B1

FIG. 10

| λ / P | $\lambda_1$ | $\lambda_2$ | $\lambda_3$ | $\lambda_4$ | $\lambda_5$ | $\lambda_6$ |
|---|---|---|---|---|---|---|
| $P_1$ | | | | | | |
| $P_2$ | | | | | | |
| $P_3$ | | | | | | |
| $P_4$ | | | | | | |
| $P_5$ | | | | | | |
| $P_6$ | | | | | | |

| λ / P | $\lambda_1$ | $\lambda_2$ | $\lambda_3$ | $\lambda_4$ | $\lambda_5$ | $\lambda_6$ |
|---|---|---|---|---|---|---|
| $P_1$ | | | | | | |
| $P_2$ | | | | | | |
| $P_3$ | | | | | | |
| $P_4$ | | | | | | |
| $P_5$ | | | | | | |
| $P_6$ | | | | | | |

**FIG. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060192969 A1

**In der Beschreibung aufgeführte Nicht-Patentliteratur**

- **NANDAKUMAR, P. ; KOVALEV, A. ; VOLKMER, A.** Vibrational imaging based on stimulated Raman scattering microscopy. *New Journal of Physics,* 2009, vol. 11, 033026
- **FREUDIGER, C. W. ; ROEFFAERS, M. B. J. ; ZHANG, X. ; SAAR, B. G. ; MIN, W. ; XIE, X. S.** Optical heterodyne-detected Raman-induced Kerr effect (OHD-RIKE) microscopy. *Journal of Physical Chemistry B,* 2011, vol. 115, 5574-5581
- **SAAR, B. G. ; FREUDIGER, C. W. ; REICHMAN, J. ; STANLEY, C. M. ; HOLTOM, G. R. ; VIE, X. S.** Videorate molecular imaging in vivo with stimulated Raman scattering. *Science,* 2010, vol. 330, 1368-1370
- **MIKHAIL N. SLIPCHENKO ; ROBERT A. OGLESBEE ; DELONG ZHANG ; WEIWU ; JI-XIN CHENG.** Heterodyne detected nonlinear optical imaging in a lock-in free manner. *J. Biophotonics,* 2012, vol. 5, 1-7
- **A. ZUMBUSCH ; G. R. HOLTOM ; X. S. XIE.** Three-dimensional vibrational imaging by coherent anti-Stokes Raman scattering. *Phys. Rev. Lett.,* 1999, vol. 82, 4142-4145
- **J. X. CHENG ; X. S. XIE.** Coherent anti-Stokes Raman scattering microscopy: Instrumentation, theory, and applications. *J. Phys. Chem. B,* 2004, vol. 108, 827-840
- **C. L. EVANS ; X. S. XIE.** Coherent anti-stokes Raman scattering microscopy: chemical imaging for biology and medicine. *Annu. Rev. Anal. Chem,* 2008, vol. 1, 883-909
- **N. DUDOVICH ; D. ORON ; Y. SILBERBERG.** Single-pulse coherently controlled nonlinear Raman spectroscopy and microscopy. *Nature,* 2002, vol. 418, 512-514
- **HELLERER, T. ; ENEJDER, A. M. K. ; ZUMBUSCH, A.** Spectral focusing: High spectral resolution spectroscopy with broad-bandwith laser pulses. *Applied Physics Letters,* 2004, vol. 85, 25-27
- **ISRAEL ROCHA-MENDOZA ; WOLFGANG LANGBEIN ; PAOLA BORRI.** Coherent anti-Stokes Raman microspectroscopy using spectral focusing with glass dispersion. *Applied Physics Letters,* 2008, vol. 93, 201103
- **ADRIAN F. PEGORARO ; ANDREW RIDSDALE ; DOUGLAS J. MOFFATT ; YIWEI JIA ; JOHN PAUL PEZACKI ; ALBERT STOLOW.** Optimally chirped multimodal CARS microscopy based on a single Ti:sapphire oscillator. *Optics Express,* 2009, vol. 17, 2984-2996